# EUROPÄISCHE PATENTSCHRIFT

(11) **EP 3 763 024 B1**
(45) Veröffentlichungstag und Bekanntmachung des Hinweises auf die Patenterteilung: **05.06.2024**
(21) Anmeldenummer: 19718115.9
(22) Anmeldetag: 10.04.2019
(51) Int. Cl.: H02K 29/08, H02K 7/102, H02K 11/01, H02K 11/215

(54) **ELEKTROMOTOR MIT INTEGRIERTEM DREHGEBER**
ELECTRIC MOTOR COMPRISING AN INTEGRATED ROTARY ENCODER
MOTEUR ÉLECTRIQUE À CODEUR ROTATIF INTÉGRÉ

(30) Priorität: 12.04.2018 DE 102018108716
(43) Veröffentlichungstag der Anmeldung: 13.01.2021
(73) Patentinhaber: Lenze SE (Societas Europaea), 31855 Aerzen (DE)
(72) Erfinder: WOLFRAM, Rouven, 31840 Hessisch Oldendorf (DE)
(74) Vertreter: Freischem & Partner Patentanwälte mbB
(86) Internationale Anmeldenummer: PCT/EP2019/059153
(87) Internationale Veröffentlichungsnummer: WO 2019/197495

(56) Entgegenhaltungen:
- WO-A1-2009/015496
- DE-A1-102011 012 357
- DE-A1-102012 019 001
- DE-A1-102015 218 856
- DE-U1- 20 011 138

## Beschreibung

Die Erfindung betrifft eine elektrische Antriebseinheit mit einem Elektromotor und einer Bremse.

Nach dem Stand der Technik werden sogenannte Drehgeber verwendet, um Bewegungsdaten der Motorwelle eines Elektromotors zu erfassen. Bei den so erfassten Bewegungen der Motorwelle kann es sich beispielsweise um die Drehzahl handeln. Elektromotoren mit Drehgebern sind beispielsweise in den Druckschriften DE 10 2015 218 856 A1, DE 200 11 138 U1 und WO 2009/015496 gezeigt. Eine elektrische Antriebseinheit mit einem Elektromotor und einer Bremse ist beispielsweise in der DE 10 2011 012 357 oder der DE 10 2012 019 001 A1 gezeigt.

Ein verbreitetes Prinzip, nachdem derartige Drehgeber Bewegungen der Motorwelle erfassen können, beruht auf der Erfassung von Magnetfeldern durch einen zum Erfassen eines Magnetfeldes geeigneten Sensor. Dieser Sensor erfasst ein Magnetfeld, das von einem Geberelement erzeugt wird. Das Geberelement ist hierzu regelmäßig drehfest mit der Welle verbunden. Hierdurch folgt die Bewegung des Geberelements der Bewegung der Welle. Der Sensor ist zweckmäßigerweise ortsfest relativ zu den ruhenden Bestandteilen des Elektromotors, insbesondere zu dessen Gehäuse, angeordnet. Auf diese Weise entsteht eine Relativbewegung zwischen dem Geberelement und dem Sensor. Da das vom Geberelement erzeugte Magnetfeld wiederum der Bewegung des Geberelements folgt, ändert sich aufgrund dieser Bewegung das von dem Sensor erfasste Magnetfeld. Aus diesen Änderungen des von dem Sensor erfassten Magnetfelds kann dann auf die zugrunde liegende Bewegung und/oder Position der Motorwelle zurückgeschlossen werden.

Nach dem Stand der Technik befindet sich ein Sensor der in Rede stehenden Art in einem separaten Gehäuse. Dieses wird auf der Motorwelle angeordnet und regelmäßig über eine geeignet gestaltete Verbindung, beispielsweise über einen Flansch, mit dem Gehäuse des Elektromotors, insbesondere mit einem Lagerschild des Elektromotors, verbunden.

Eine derartige Konstruktion ist jedoch aufwändig, da ein separates Gehäuse für den Drehgeber benötigt wird. Dieses muss regelmäßig nicht nur den Sensor aufnehmen, sondern auch das auf der Welle angeordnete Geberelement umschließen. Eine weitere Folge der Anordnung des Drehgebers in einem separaten Gehäuse ist ein zusätzlicher Platzbedarf entlang der Motorwelle, der eine entsprechend verlängerte Motorwelle und damit einen entsprechend höheren Platzbedarf des Antriebssystems zur Folge hat.

Der Erfindung liegt daher die Aufgabe zugrunde, eine elektrische Antriebseinheit aufzuzeigen, die kostengünstiger ist und/oder eine kompaktere Bauweise ermöglicht.

Die Aufgabe wird gelöst durch einen eine elektrische Antriebseinheit mit den Merkmalen des unabhängigen Anspruchs. Die Merkmale der abhängigen Ansprüche betreffen vorteilhafte Ausführungsformen.

Der Elektromotor weist einen Sensor zur Erfassung eines Magnetfeldes auf, der in ein Lagerschild des Elektromotors integriert ist.

Es hat sich gezeigt, dass bei den Lagerschilden herkömmlicher Elektromotoren regelmäßig derart viel Raum durch das Lagerschild beansprucht wird, dass es möglich ist, einen Sensor zur Erfassung eines Magnetfeldes in das Lagerschild zu integrieren, ohne dabei die Funktionalität des Lagerschilds nachteilig zu beeinträchtigen.

Der Elektromotor kann ein Geberelement zur Erzeugung eines von dem Sensor erfassbaren Magnetfeldes aufweisen. Dieses kann in zur Achse bzw. Welle des Elektromotors paralleler Richtung im Bereich des Lagerschilds angeordnet sein. Die Anordnung des Geberelements im Bereich des Lagerschilds ist deswegen von Vorteil, da so auch durch das Geberelement, welches insbesondere drehfest mit der Welle verbunden ist, kein zusätzlicher Platzbedarf auf der Welle entsteht bzw. die für den Drehgeber benötigte zusätzliche Welle der Welle zumindest minimiert wird.

Das Geberelement ist bevorzugt derart gestaltet, dass das von ihm erzeugte Magnetfeld in Umfangsrichtung um die Welle des Elektromotors fluktuiert bzw. Schwankungen unterworfen ist. Dies kann beispielsweise dadurch erreicht werden, dass das Geberelement eine Mehrzahl von PermanentMagneten aufweist, die in Umfangsrichtung verteilt um die Welle angeordnet sind.

Der Elektromotor weist ein Abschirmelement zur magnetischen Abschirmung des Sensors gegen ein von außen auf den Elektromotor einwirkendes Magnetfeld auf. Bei diesem Abschirmelement kann es sich beispielsweise um ein Abschirmblech handeln. Ein derartiges Abschirmelement hat den Vorteil, dass äußere Einflüsse magnetischer Art, die den ordnungsgemäßen Betrieb des Sensors stören könnten, von diesem abgeschirmt werden. Derartige störende Magnetfelder können beispielsweise von elektromagnetisch betätigbaren Bremsen herrühren, die auf der Welle und/oder in Verlängerung der Welle des Motors angeordnet sind.

Bei dem Abschirmelement kann es sich um ein Element aus einem elektrisch leitfähigen Material handeln. Elektrisch leitfähige Materialien eignen sich besonders gut zum Abschirmen elektromagnetischer Felder. Das elektrisch leitfähige Material kann auch ein Metall sein.

Das Abschirmelement kann flächig gestaltet und insbesondere derart relativ zu der Welle angeordnet sein, dass seine Erstreckung in zur Welle, zumindest im Wesentlichen, senkrechter Richtung wesentlich größer ist als seine Dicke in zur Welle, zumindest im Wesentlichen paralleler Richtung. Eine derartige Anordnung bzw. Gestaltung des Abschirmelements hat den Vorteil, dass dieses wenig Platz entlang der Welle beansprucht.

Das Geberelement kann zwischen dem durch das Lagerschild gestützten Lager des Elektromotors und dem Abschirmelement angeordnet sein. Diese Anordnung bietet zum einen den Vorteil, dass das Geberelement sich in dem von dem Abschirmelement abgeschirmten Bereich befindet. Weiterhin kann der ansonsten ungenutzte Raum zwischen Welle und Lagerschild in diesem Bereich für die Anordnung des Geberelements in vorteilhafter Weise genutzt werden.

Das Lagerschild kann eine Anlagefläche zur Abstützung des Abschirmelements in zur Achse des Elektromotors paralleler Richtung bzw. axialer aufweisen. Diese Anlagefläche kann insbesondere zur Aufnahme einer auf das Abschirmelement aufgebrachten mechanischen Kraft geeignet und bestimmt sein. Auf diese Weise wird es möglich, das Abschirmelement mechanisch zu belasten. Durch eine flächige Abstützung auf einer entsprechenden Anlagefläche können so auch in ein vergleichsweise dünnes Abschirmelement mechanische Kräfte, insbesondere in zur Welle bzw. Achse des Elektromotors paralleler Richtung gerichtete mechanische Kräfte, eingeleitet werden. Dies ist insbesondere dann sinnvoll, wenn sich an das Lagerschild weitere Elemente einer Antriebseinheit, deren Bestandteil der Elektromotor ist, anschließen sollen. Bei diesen weiteren Bestandteilen kann es sich beispielsweise um eine Bremse handeln. Die Anlagefläche ermöglicht es dann, dass beispielsweise durch die Bremse erzeugte Kräfte über das Abschirmelement in das Lagerschild eingeleitet werden. So können insbesondere Reibbeläge der Bremsen über das Abschirmelement an dem Lagerschild abgestützt werden.

Das Lagerschild kann eine Ausnehmung zur Aufnahme des Sensors und/oder eine Ausnehmung zur Aufnahme eines mit dem Sensor verbundenen Kabels aufweisen. Die Ausnehmung kann so gestaltet sein, dass sie in zur Achse bzw. Welle des Elektromotors paralleler Richtung gegenüber der Anlagefläche zurückspringt bzw. eine Vertiefung in der Anlagefläche bildet. Es hat sich überraschenderweise gezeigt, dass es möglich ist, die Abstützung des Abschirmelements durch die Anlagefläche in einzelnen Zonen der Anlagefläche zu unterbrechen, ohne die Abstützfunktion wesentlich zu beeinträchtigen. Hierdurch kann ein Aufnahmeraum für den Sensor und/oder ein mit dem Sensor verbundenes Kabel geschaffen werden, der insbesondere durch das Abschirmelement geschlossen wird. Hiermit ergibt sich eine einfache Montage des Sensors sowie eines zur Versorgung des Sensors vorgesehenen Kabels.

Das Lagerschild kann beispielsweise ein Gussteil sein. Insbesondere lässt sich eine Ausnehmung zur Aufnahme des Sensors und/oder eines Zugentlastungselements für ein mit dem Sensor verbundenes Kabel gießtechnisch sinnvoll in das Lagerschild einformen. Auch können die Ausnehmungen zum Abschirmelement hin offen gestaltet sein und so eine einfache, weil insbesondere hinterschneidungsfreie, Gestaltung des Gussteils ermöglichen. Durch ein insbesondere flächiges Abschirmelement können die Ausnehmungen in einfacher Weise geschlossen werden.

An dem Abschirmelement kann weiter ein Sitz für ein Dichtelement vorgesehen sein. Das Dichtelement dient insbesondere dazu, eine Abdichtung zwischen Abschirmelement und Motorwelle zu gewährleisten. Durch diese Anordnung ergibt sich eine insgesamt vorteilhafte Konstruktion, da das Abschirmelement auf diese Weise nicht nur eine Abschirmung gegen elektromagnetische Einflüsse, sondern auch eine Schutzfunktion gegen weitere schädliche Umwelteinflüsse, beispielsweise das Eindringen von Schmutz, gewährleistet.

Ein Elektromotor der vorstehend beschriebenen Art ist mit einer Bremse zu einer Antriebseinheit kombiniert. Hierbei ist das Abschirmelement zwischen dem Sensor und der Bremse angeordnet. Das Abschirmelement schirmt so den Sensor vor elektromagnetischen Feldern, die durch die Bremse verursacht werden, ab. Insbesondere bei elektromagnetisch betätigbaren Federkraftbremsen werden leistungsfähige Elektromagnete zum Lösen bzw. Lüften der Bremsen und/oder zum halten der Bremsen im gelüfteten bzw. gelösten Zustand eingesetzt. Deren störende Einflüsse können durch das Abschirmelement von dem Sensor ferngehalten werden.

Es ist möglich, dass eine der Bremse zugewandte Oberfläche des Abschirmelements eine Reibfläche der Bremse bildet. Zu diesem Zweck kann insbesondere ein Reibbelag direkt auf dem Abschirmelement aufgebracht sein. Eine derartige Anordnung hat den Vorteil, dass nicht zwei separate Bauteile, nämlich ein Abschirmelement zur elektromagnetischen Abschirmung des Sensors sowie ein separates Reibelement, beispielsweise ein Reibblech, benötigt werden. Vielmehr kann das Abschirmelement die Funktion des Reibelements der Bremse ebenfalls übernehmen, wodurch wenigstens ein Bauteil eingespart werden kann.

Weitere praktische Ausführungsformen und Vorteile der Erfindung sind nachfolgend im Zusammenhang mit den Zeichnungen beschrieben. Es zeigen:

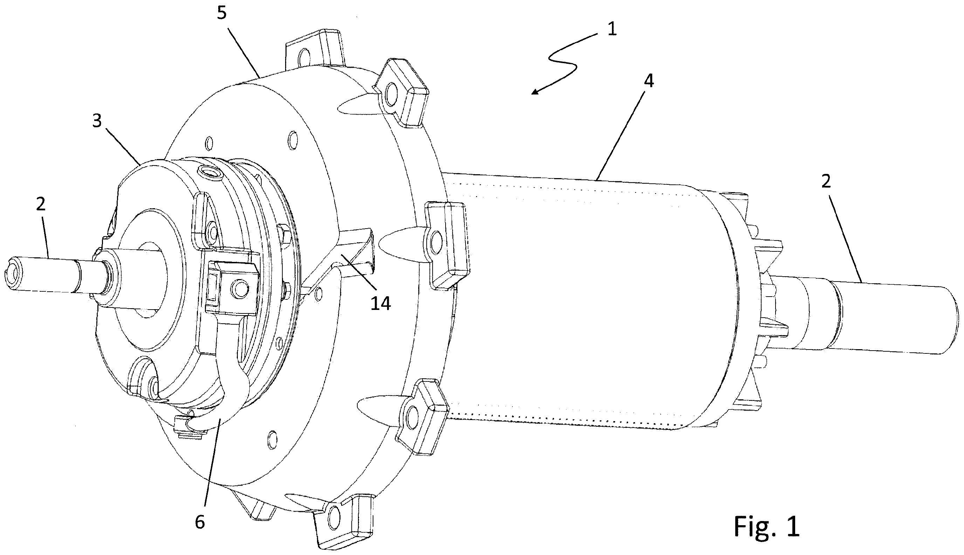

- Fig. 1: eine perspektivische Darstellung eines Teils einer erfindungsgemäßen elektrischen Antriebseinheit,

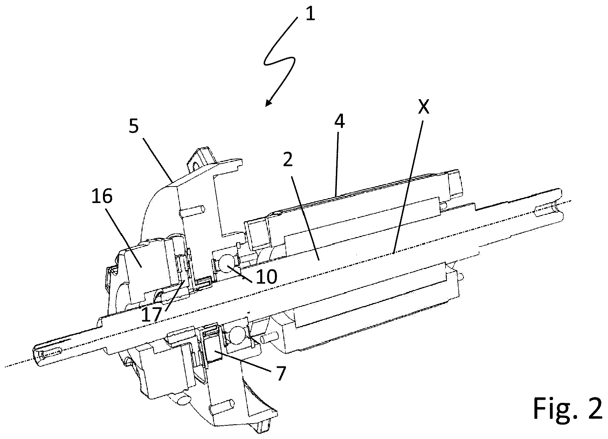

- Fig. 2: eine perspektivische Schnittdarstellung des Teils der Antriebseinheit,

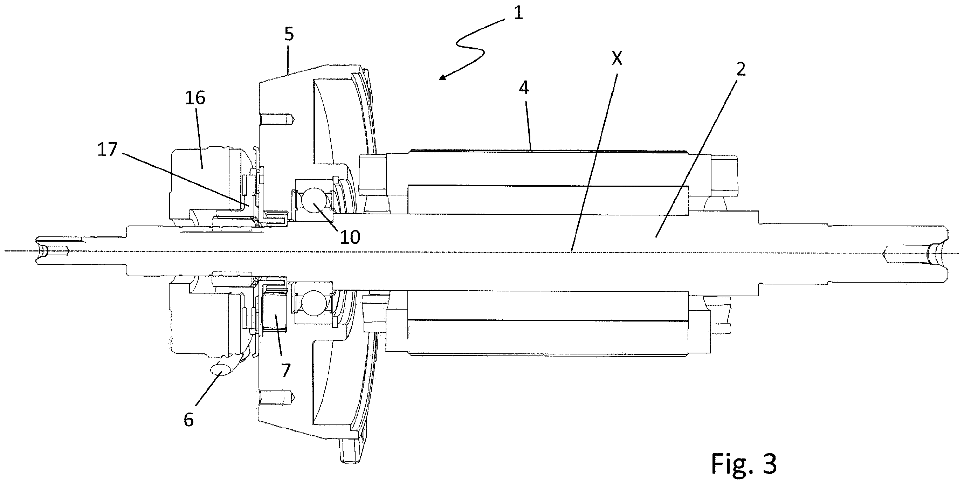

- Fig. 3: eine Querschnittsdarstellung des Teils der elektrischen Antriebseinheit,

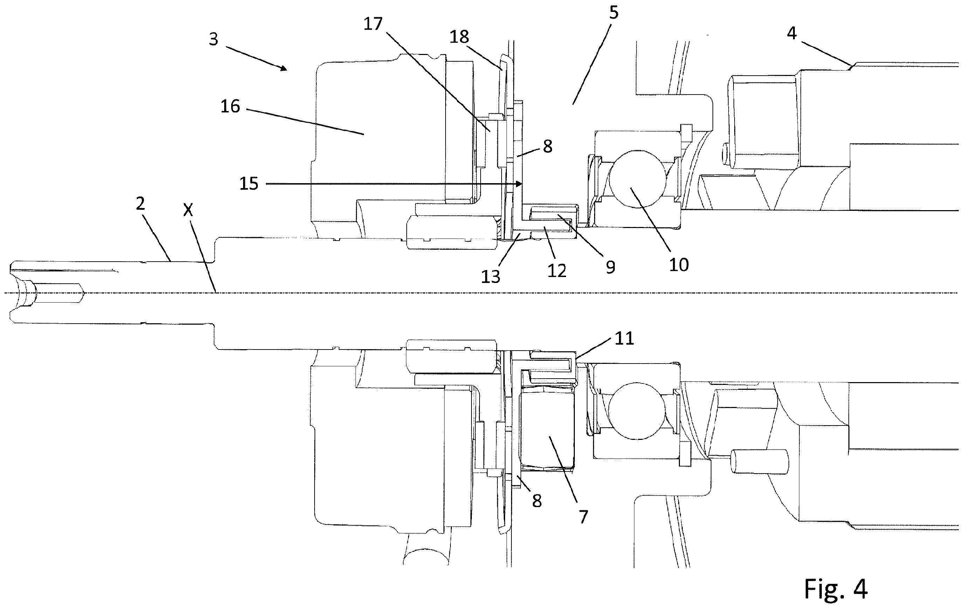

- Fig. 4: eine vergrößert dargestellte Teildarstellung eines Bereichs aus Figur 3.

Die beispielhafte elektrische Antriebseinheit 1 weist einen Elektromotor mit einer auf der Welle 2 des Elektromotors angeordneten Bremse 3 auf. Von dem Elektromotor sind in den Figuren lediglich der Rotor 4 sowie das der Bremse 3 zugewandte Lagerschild 5 dargestellt. In dem gezeigten Beispiel handelt es sich bei dem Lagerschild 5 um das Lagerschild, welches der Abtriebsseite des Elektromotors gegenüberliegt und üblicherweise auch als B-Lagerschild bezeichnet wird.

Bei der Bremse 3 kann es sich um eine elektrisch betätigbare Federkraftbremse handeln. Die Bremse 3 kann eine Handlüfteinrichtung 6 aufweisen. Der Sensor 7 ist in das Lagerschild 5 integriert. Im gezeigten Beispiel wird dies durch einen in das Lagerschild 5 eingeformten Aufnahmeraum in Gestalt einer Ausnehmung für den Sensor 7 ermöglicht. Der Aufnahmeraum bzw. die Ausnehmung kann - wie beispielhaft dargestellt - durch ein Abschirmelement 8 verschlossen sein.

Es kann wie im gezeigten Beispiel eine Ausnehmung 14 zur Aufnahme eines Kabels zur Verbindung mit dem Sensor 7 in dem Lagerschild 5 vorgesehen sein. Diese kann wie im gezeigten Beispiel zumindest teilweise durch das Abschirmelement 8 verschlossen sein. Die Ausnehmung kann Einformungen und/oder Verbindungselemente zur Fixierung eines Zugentlastungselements für das Kabel aufweisen.

Das Geberelement 9 kann wie im gezeigten Beispiel auf der Welle 2 angeordnet und insbesondere drehfest mit der Welle 2 verbunden sein. Unter einer drehfesten Verbindung ist in diesem Zusammenhang insbesondere zu verstehen, dass sich das Geberelement 9 bei bestimmungsgemäßer Verwendung des Elektromotors bzw. der elektrischen Antriebseinheit nicht in Umfangsrichtung der Welle 2 auf der Welle 2 bewegt.

In zur Achse X bzw. zur Welle 2 des Elektromotors paralleler Richtung können der Sensor 7 und das Geberelement 9 wie im gezeigten Beispiel zwischen dem durch das Lagerschild 5 abgestützten Lager 10 und dem Abschirmelement 8 angeordnet sein.

Im gezeigten Beispiel ist das Geberelement 9 an einer Wellenschulter 11 in zur Achse X des Elektromotors paralleler Richtung abgestützt. Die Abstützung kann jedoch auch auf andere Weise, beispielsweise - gegebenenfalls unter Verwendung eines Zwischenelements - am Lager 10 erfolgen.

Im gezeigten Beispiel greift das Abschirmelement 8 nach Art einer Labyrinthdichtung in das Geberelement 9 ein. Hierfür weist das Abschirmelement 8 einen sich entlang der Welle 2 erstreckenden Bereich 12 auf. Alternativ und/oder ergänzend ist es möglich, ein Dichtelement, wie beispielsweise einen Radialwellendichtring, am Abschirmelement 8 zu befestigen. Dies kann beispielsweise im Bereich der zur Welle 2 weisenden Fläche 13 des Abschirmelements 8 erfolgen.

Das Lagerschild 5 kann eine Anlagefläche 15 zur Anlage bzw. Abstützung des Abschirmelements 8 in Richtung der Achse X des Elektromotors aufweisen. Die Ausnehmung zur Aufnahme des Sensors 7 sowie die Ausnehmung 14 zur Aufnahme des Kabels können so gestaltet sein, dass sie gegenüber der Anlagefläche 15 wie dargestellt zurückspringen. Durch die flächige Anlage des Abschirmelements 8 und der Anlagefläche 15 kann das Abschirmelement 8 vergleichsweise große Kräfte, die, zumindest im Wesentlichen, parallel zur Achse X des Elektromotors gerichtet sind, aufnehmen. Die Kräfte werden über das Abschirmelement 8 in die Anlagefläche 15 eingeleitet, die das Abschirmelement 8 in zur Achse X des Elektromotors paralleler Richtung abstützt.

Im dargestellten Beispiel kann die Bremse ein Magnetgehäuse 16, einen Bremsrotor 17 und ein Reibblech 18 aufweisen. Der Bremsrotor 17 ist mit der Welle 2 drehfest und axial verschiebbar verbunden. Beim Schließen bzw. Verknüpfen der Bremse 3 wird der Bremsrotor 17 gegen das Reibblech 18 gedrückt. Die dadurch entlang der Achse X des Motors in das Reibblech 18 eingeleiteten Kräfte können vom Abschirmelement 8 aufgenommen und von diesem über die Anlagefläche 15 in das Lagerschild 5 eingeleitet werden. Alternativ ist es auch möglich, dass eine der Bremse zugewandte Oberfläche des Abschirmelements 8 eine Reibfläche der Bremse bildet. Dann kann insbesondere das Reibblech 18 entfallen. In diesem Fall ist es möglich, dass der Bremsrotor 17 beim Schließen bzw. Verknüpfen der Bremse unmittelbar auf diese Oberfläche des Abschirmelements 8 gedrückt wird. Die Oberfläche des Abschirmelements 8 kann hierfür eine geeignete Beschichtung, insbesondere einen Reibbelag, aufweisen.

### Bezugszeichenliste

- 1: Elektrische Antriebseinheit
- 2: Welle
- 3: Bremse
- 4: Rotor
- 5: Lagerschild
- 6: Handlüfteinrichtung
- 7: Sensor
- 8: Abschirmelement
- 9: Geberelement
- 10: Lager
- 11: Wellenschulter
- 12: Bereich des Abschirmelements
- 13: Fläche des Abschirmelements
- 14: Ausnehmung
- 15: Anlagefläche
- 16: Magnetgehäuse
- 17: Bremsrotor
- 18: Reibblech

- X: Achse des Elektromotors

## Patentansprüche

1. Elektrische Antriebseinheit (1) mit einer Bremse (3), insbesondere einer elektromagnetisch betätigbaren Bremse (3), und einem Elektromotor, wobei der Elektromotor ein Lagerschild (5) aufweist, wobei der Elektromotor einen Sensor (7) zur Erfassung eines Magnetfeldes aufweist, wobei der Elektromotor ein Abschirmelement (8) zur magnetischen Abschirmung des Sensors (7) gegen ein von außen auf den Elektromotor einwirkendes Magnetfeld aufweist, wobei das Abschirmelement (8) zwischen dem Sensor (7) und der Bremse (3) angeordnet ist, **dadurch gekennzeichnet, dass** der Sensor (7) in das der Bremse (3) zugewandte Lagerschild (5) des Elektromotors integriert ist.

2. Elektrische Antriebseinheit (1) nach Anspruch 1, **dadurch gekennzeichnet, dass** der Elektromotor ein, insbesondere drehfest mit der Welle (2) des Elektromotors verbundenes, Geberelement (9) zur Erzeugung eines vom Sensor (7) erfassbaren Magnetfeldes aufweist.

3. Elektrische Antriebseinheit (1) nach Anspruch 1 oder 2, **dadurch gekennzeichnet, dass** der Elektromotor ein Abschirmblech als Abschirmelement (8) zur magnetischen Abschirmung des Sensors (7) gegen ein von außen auf den Elektromotor einwirkendes Magnetfeld aufweist.

4. Elektrische Antriebseinheit (1) nach Anspruch 2 oder 3 in Verbindung mit Anspruch 2, **dadurch gekennzeichnet, dass** das Geberelement (9) in zur Achse (X) des Elektromotors paralleler Richtung im Bereich des Lagerschildes (5), insbesondere zwischen dem durch das Lagerschild (5) gestützten Lager (10) des Motors und dem Abschirmelement (8), angeordnet ist.

5. Elektrische Antriebseinheit (1) nach einem der vorigen Ansprüche, **dadurch gekennzeichnet, dass** das Lagerschild (5) eine Anlagefläche (15) zur Abstützung des Abschirmelements (8) in zur Achse (X) des Elektromotors paralleler Richtung, insbesondere eine Anlagefläche (15) zur Aufnahme einer auf das Abschirmelement (8) aufgebrachten mechanischen Kraft, aufweist.

6. Elektrische Antriebseinheit (1) nach einem der vorigen Ansprüche, **dadurch gekennzeichnet, dass** das Lagerschild (5) eine Ausnehmung (14) zur Aufnahme des Sensors (7) und/oder eine Ausnehmung (14) zur Aufnahme eines mit dem Sensor (7) verbundenen Kabels aufweist, wobei insbesondere die Ausnehmung (14) zur Aufnahme des Sensors (7) und/oder die Ausnehmung (14) zur Aufnahme eines mit dem Sensor (7) verbundenen Kabels in zur Achse (X) des Elektromotors paralleler Richtung gegenüber der Anlagefläche (15) zurückspringt und/oder eine Vertiefung in der Anlagefläche (15) bildet.

7. Elektrische Antriebseinheit (1) nach einem der vorigen Ansprüche, **dadurch gekennzeichnet, dass** das Lagerschild (5) ein Gussteil ist, insbesondere wobei die Ausnehmung (14) zur Aufnahme des Kabels, die Ausnehmung (14) zur Aufnahme des Sensors (7) und/oder eine Aufnahme für ein Zugentlastungselement für das Kabel gießtechnisch in das Lagerschild (5) eingeformt sind.

8. Elektrische Antriebseinheit (1) nach einem der vorigen Ansprüche, **dadurch gekennzeichnet, dass** an dem Abschirmelement (8) ein Sitz für ein Dichtelement, insbesondere einen Radialwellendichtring, vorgesehen ist.

9. Elektrische Antriebseinheit (1) nach einem der vorigen Ansprüche, **dadurch gekennzeichnet, dass** eine der Bremse (3) zugewandte Oberfläche des Abschirmelements (8) eine Reibfläche der Bremse (3) bildet.

## Claims

1. Electric drive unit (1) having a brake (3), in particular an electromagnetically operated brake (3), and an electric motor, wherein the electric motor has an end shield (5), wherein the electric motor has a sensor (7) for sensing a magnetic field, wherein the electric motor has a shielding element (8) for magnetic shielding of the sensor (7) against a magnetic field acting externally on the electric motor, wherein the shielding element (8) is arranged between the sensor (7) and the brake (3), **characterized in that** the sensor (7) is integrated into the end shield (5) facing the brake (3) of the electric motor.

2. Electric drive unit (1) according to claim 1, **characterized in that** the electric motor has an encoder element (9), in particular connected in a rotationally fixed manner to the shaft (2) of the electric motor, for generating a magnetic field that can be sensed by the sensor (7).

3. Electric drive unit (1) according to claim 1 or 2, **characterized in that** the electric motor has a shielding plate as a shielding element (8) for magnetic shielding of the sensor (7) against a magnetic field acting externally on the electric motor.

4. Electric drive unit (1) according to claim 2 or 3 in combination with claim 2, **characterized in that** the encoder element (9) is arranged in a direction parallel to the axis (X) of the electric motor, in the region of the end shield (5), in particular between the bearing (10) of the motor supported by the end shield (5) and the shielding element (8).

5. Electric drive unit (1) according to any one of the preceding claims, **characterized in that** the end shield (5) has a seating surface (15) for supporting the shielding element (8) in a direction parallel to the axis (X) of the electric motor, in particular a seating surface (15) for taking a mechanical force applied to the shielding element (8).

6. Electric drive unit (1) according to any one of the preceding claims, **characterized in that** the end shield (5) has a recess (14) for receiving the sensor (7) and/or a recess (14) for receiving a cable connected to the sensor (7), wherein in particular the recess (14) for receiving the sensor (7) and/or the recess (14) for receiving a cable connected to the sensor (7) is set back from the seating surface (15) in a direction parallel to the axis (X) of the electric motor, and/or forms a depression in the seating surface (15).

7. Electric drive unit (1) according to any one of the preceding claims, **characterized in that** the end shield (5) is a cast part, in particular wherein the recess (14) for receiving the cable, the recess (14) for receiving the sensor (7) and/or a seat for a strain relief element for the cable are formed into the end shield (5) by casting.

8. Electric drive unit (1) according to any one of the preceding claims, **characterized in that** a seat for a sealing element, in particular a radial shaft seal, is provided on the shielding element (8).

9. Electric drive unit (1) according to any one of the preceding claims, **characterized in that** a surface of the shielding element (8) that faces toward the brake (3) forms a friction surface of the brake (3).

## Revendications

1. Unité d'entraînement électrique (1) comprenant un frein (3), en particulier un frein (3) à commande électromagnétique, et un moteur électrique, dans laquelle le moteur électrique présente un couvercle de palier (5), dans laquelle le moteur électrique présente un capteur (7) permettant de détecter un champ magnétique, dans laquelle le moteur électrique présente un élément de blindage (8) permettant de protéger magnétiquement le capteur (7) contre un champ magnétique agissant de l'extérieur sur le moteur électrique, dans laquelle l'élément de blindage (8) est agencé entre le capteur (7) et le frein (3), **caractérisée en ce que** le capteur (7) est intégré dans le couvercle de palier (5), tourné vers le frein (3), du moteur électrique.

2. Unité d'entraînement électrique (1) selon la revendication 1, **caractérisée en ce que** le moteur électrique présente un élément émetteur (9), en particulier relié de manière solidaire en rotation à l'arbre (2) du moteur électrique, permettant de générer un champ magnétique pouvant être détecté par le capteur (7).

3. Unité d'entraînement électrique (1) selon la revendication 1 ou 2, **caractérisée en ce que** le moteur électrique présente une tôle de blindage faisant office d'élément de blindage (8) permettant de protéger magnétiquement le capteur (7) contre un champ magnétique agissant de l'extérieur sur le moteur électrique.

4. Unité d'entraînement électrique (1) selon la revendication 2 ou la revendication 3 en lien avec la revendication 2, **caractérisée en ce que** l'élément émetteur (9) est agencé dans la région du couvercle de palier (5), en particulier entre le palier (10), soutenu par le couvercle de palier (5), du moteur et l'élément de blindage (8), dans la direction parallèle à l'axe (X) du moteur électrique.

5. Unité d'entraînement électrique (1) selon l'une quelconque des revendications précédentes, **caractérisée en ce que** le couvercle de palier (5) présente une surface d'appui (15) permettant de soutenir l'élément de blindage (8) dans la direction parallèle à l'axe (X) du moteur électrique, en particulier une surface d'appui (15) permettant d'absorber une force mécanique appliquée sur l'élément de blindage (8).

6. Unité d'entraînement électrique (1) selon l'une quelconque des revendications précédentes, **caractérisée en ce que** le couvercle de palier (5) présente un évidement (14) permettant d'accueillir le capteur (7) et/ou un évidement (14) permettant d'accueillir un câble relié au capteur (7), dans laquelle en particulier l'évidement (14) permettant d'accueillir le capteur (7) et/ou l'évidement (14) permettant d'accueillir un câble relié au capteur (7) est/sont rentrant par rapport à la surface d'appui (15) dans la direction parallèle à l'axe (X) du moteur électrique et/ou forme(nt) un renfoncement dans la surface d'appui (15).

7. Unité d'entraînement électrique (1) selon l'une quelconque des revendications précédentes, **caractérisée en ce que** le couvercle de palier (5) est une pièce moulée, en particulier dans laquelle l'évidement (14) permettant d'accueillir le câble, l'évidement (14) permettant d'accueillir le capteur (7) et/ou un logement destiné à un élément de décharge de traction destiné au câble sont formés dans le couvercle de palier (5) grâce à des techniques de fonderie.

8. Unité d'entraînement électrique (1) selon l'une quelconque des revendications précédentes, **caractérisée en ce qu'**un siège destiné à un élément d'étanchéité, en particulier à une bague d'étanchéité d'arbre radial, est prévu au niveau de l'élément de blindage (8).

9. Unité d'entraînement électrique (1) selon l'une quelconque des revendications précédentes, **caractérisée en ce qu'**une surface, tournée vers le frein (3), de l'élément de blindage (8) forme une surface de friction du frein (3).
